# EUROPÄISCHE PATENTANMELDUNG

(11) **EP 2 096 412 A2**
(43) Veröffentlichungstag der Anmeldung: **02.09.2009**
(21) Anmeldenummer: 09001766.6
(22) Anmeldetag: 09.02.2009
(51) Int. Cl.: G01C 21/36

(54) **Verfahren zum Betrieb eines Navigationssystems**

(30) Priorität: 29.02.2008 DE 102008012065; 13.06.2008 DE 102008028090
(71) Anmelder: Navigon AG, 20251 Hamburg (DE)
(72) Erfinder: Katzer, Jochen, 91605 Bergtshofen (DE)
(74) Vertreter: von den Steinen, Axel

(57) **Zusammenfassung**

Die Erfindung betrifft ein Verfahren zum Betrieb eines Navigationssystems mit einer Aufnahmeeinrichtung, an der eine akustische Adresseingabe, die aus mehreren Eingabebestandteilen besteht, aufgenommen werden kann, wobei die Eingabebestandteile der Adresse mit einem Spracherkennungsmodul analysiert werden, wobei abhängig vom Ergebnis der Spracherkennungsanalyse zumindest ein geografischer Ort, der durch eine Adresse mit mehreren Adressbestandteilen definiert ist, aus einer Datenbank zur Weiterverarbeitung ausgewählt wird, wobei
a) für einen ersten Eingabebestandteil eine Spracherkennungsanalyse durchgeführt wird, wobei abhängig vom Ergebnis der Spracherkennungsanalyse zum ersten Eingabebestandteil mehrere mögliche erste Adressbestandteile aus der Datenbank ausgewählt werden, und wobei zu jedem dieser alternativen ersten Adressbestandteile ein Übereinstimmungswert zur Quantifizierung der akustischen Übereinstimmung mit dem ersten Eingabebestandteil ermittelt wird;
b) für zumindest einen zweiten Eingabebestandteil eine Spracherkennungsanalyse durchgeführt wird, wobei abhängig vom Ergebnis der Spracherkennungsanalyse zum zweiten Eingabebestandteil mehrere mögliche zweite Adressbestandteile aus der Datenbank ausgewählt werden, und wobei zu jedem dieser alternativen zweiten Adressbestandteile ein Übereinstimmungswert zur Quantifizierung der akustischen Übereinstimmung mit dem zweiten Eingabebestandteil ermittelt wird;
c) für unterschiedliche Kombinationen aus jeweils verschiedenen ersten Adressbestandteilen und zweiten Adressbestandteilen jeweils eine Kombinationsbewertung ermittelt wird, die auf den Übereinstimmungswerten der miteinander kombinierten Adressbestandteile beruht.

## Beschreibung

Die Erfindung betrifft ein Verfahren zum Betrieb eines Navigationssystems nach dem Oberbegriff des Anspruchs 1.

Bekannte Navigationssysteme sind mit Spracherkennungssoftware ausgestattet, um es dem Benutzer zu ermöglichen, bestimmte Eingaben, insbesondere die Eingabe von Adressen, auf akustische Weise vorzunehmen. Dies bedeutet mit anderen Worten, dass bei diesen Navigationssystemen mit Spracherkennungssystem die Adresse nicht mehr an einer Tastatur oder an einem Touchscreen alphanumerisch eingegeben werden muss, sondern dass die verschiedenen Eingabebestandteile der Adresse in eine Aufnahmeeinrichtung, insbesondere ein Mikrophon, eingesprochen werden. Durch Sprachanalyse mittels eines Spracherkennungsmoduls können diese akustischen Eingaben dann analysiert und einem in einer Datenbank gespeicherten geografischen Ort, der durch eine Adresse mit den entsprechenden Adressbestandteilen definiert ist, zugeordnet werden. Dieser geografische Ort wird dann aus der Datenbank ausgewählt und zur Weiterverarbeitung, beispielsweise zur Routenplanung, benutzt.

Bei der sprachgesteuerten Adresserkennung bekannter Navigationssysteme ist es üblich, dass die verschiedenen Eingabebestandteile der Adresse, beispielsweise der Städtename, der Straßenname und die Hausnummer, getrennt voneinander eingegeben und nacheinander analysiert werden. Dies bedeutet, dass beispielsweise zunächst per Spracheingabe ein Städtename gesprochen und akustisch aufgenommen und anschließend durch Sprachanalyse eine Liste von festen Treffern aus allen Städten erstellt wird. Der Benutzer wählt dann per Sprache oder manuell eine Stadt aus. Anschließend kann dann per Spracheingabe ein Straßenname aufgenommen und analysiert und durch Sprachanalyse ausgewählt werden. Zuletzt wird dann noch die Hausnummer akustisch aufgenommen, sprachanalysiert und durch den Benutzer eine endgültige Auswahl getroffen.

Nachteilig an diesem bekannten Verfahren zur Adresserkennung per Spracheingabe ist es, dass eine Vielzahl von Interaktionen zwischen dem Benutzer und dem Navigationssystem notwendig sind. So muss jede einzelne Eingabe der verschiedenen Eingabebestandteile der Adresse bestätigt werden. Befindet sich der gesuchte Treffer nicht an der ersten Stelle einer Auswahlliste, muss der Benutzer außerdem zusätzlich bis zu dreimal das Display des Navigationssystems betrachten und den richtigen Treffer auswählen. Insgesamt wird somit eine relativ lange Zeit für den Eingabeprozess benötigt. Außerdem wird die Aufmerksamkeit des Benutzers stark gebunden, was insbesondere im Straßenverkehr zu Gefahrensituationen führen kann.

Ausgehend von diesem Stand der Technik ist es deshalb Aufgabe der vorliegenden Erfindung, ein neues Verfahren zum Betrieb eines Navigationssystems vorzuschlagen, bei dem die Anzahl der Interaktionen bei der akustischen Adresseingabe und Sprachanalyse verringert und die für die Eingabe notwendige Zeit verkürzt wird.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass zumindest für zwei Eingabebestandteile der akustischen Adresseingabe eine Spracherkennungsanalyse durchgeführt wird. Abhängig vom Ergebnis dieser Spracherkennungsanalyse werden dann zum ersten Eingabebestandteil mehrere mögliche erste Adressbestandteile aus der Datenbank ausgewählt und zum zweiten Eingabebestandteil mehrere mögliche zweite Adressbestandteile aus der Datenbank ausgewählt. Zu jeder dieser Alternativen der ersten Adressbestandteile bzw. der zweiten Adressbestandteile wird außerdem ein Übereinstimmungswert zur Quantifizierung der akustischen Übereinstimmung mit dem ersten Eingabebestandteil bzw. mit dem zweiten Eingabebestandteil ermittelt. Dieser Übereinstimmungswert charakterisiert also die Wahrscheinlichkeit, mit der der jeweilige Adressbestandteil dem vom Benutzer akustisch eingegebenen Eingabebestandteil der Adresse entspricht.

Nachdem für zumindest zwei Eingabebestandteile dieser Art eine Spracherkennungsanalyse und Ermittlung der jeweiligen akustischen Übereinstimmungswerte durchgeführt wurde, werden aus den verschiedenen bei dieser Sprachanalyse ermittelten ersten Adressbestandteilen und zweiten Adressbestandteilen unterschiedliche Kombinationen gebildet, und jeder dieser Kombinationen wird eine Kombinationsbewertung zugeordnet. Diese Kombinationsbewertung beruht dabei auf den den Adressbestandteilen jeweils zugeordneten akustischen Übereinstimmungswerten.

Durch diese neuartige Kombinationsbewertung gelingt es, dass die durch Spracherkennungsanalyse bestimmten Übereinstimmungswerte nicht sequentiell nacheinander abgearbeitet werden, sondern in einer Gesamtbewertung, nämlich der Kombinationsbewertung, gemeinsam Berücksichtigung finden. Die für die Eingabe einer gesamten Adresse notwendigen Interaktionen und die dafür notwendige Eingabezeit werden im Ergebnis deutlich reduziert. Außerdem wird die Trefferwahrscheinlichkeit durch die kombinierte Bewertung der Spracherkennungsergebnisse aller Eingabebestandteile erheblich erhöht, so dass weniger Benutzerinteraktionen zur Korrektur der Adresseingabe notwendig sind.

In welcher Weise die Ergebnisse des erfindungsgemäßen Verfahrens unter Einschluss der Kombinationsbewertung weiterverarbeitet werden, ist grundsätzlich beliebig. Nach einer ersten bevorzugten Verfahrensvariante wird diejenige Kombination von Adressbestandteilen mit der besten Kombinationsbewertung zur Weiterverarbeitung ausgewählt. Beispielsweise kann diese Kombination, die gemäß der Kombinationsbewertung die höchste Trefferwahrscheinlichkeit aufweist, dem Benutzer zur Auswahl und Bestätigung angezeigt werden.

Alternativ bzw. additiv dazu kann auch eine Liste aus mehreren Kombinationen von Adressbestandteilen gebildet werden. Die in der Liste enthaltenen Kombinationen weisen dabei die jeweils relativ höchsten Kombinationsbewertungen und damit die relativ höchste Trefferwahrscheinlichkeit auf. Aus dieser Liste kann der Benutzer dann beispielsweise die Adresse auswählen und bestätigen, die er tatsächlich wünscht.

Um diese Auswahl und Bestätigung durch den Benutzer in einfacher Weise zu ermöglichen, kann die Liste aus mehreren Kombinationen von Adressbestandteilen für den Benutzer ausgegeben, insbesondere angezeigt, werden.

Aus welchen Eingabebestandteilen eine Adresseingabe besteht, hängt vielfach von den landestypischen Gegebenheiten ab. Für die meisten Länder ist jedoch die Eingabe eines Städtenamens, eines Straßennamens und einer Hausnummer zur eindeutigen Spezifikation einer Adresse innerhalb eines bestimmten geografischen Gebiets, beispielsweise eines Nationalstaates, ausreichend.

Besonders vorteilhaft ist es dabei, wenn das Navigationssystem den Benutzer nacheinander zur Eingabe des Städtenamens und/oder zur Eingabe des Straßennamens und/oder zur Eingabe der Hausnummer auffordert. Die Reihenfolge der Eingabe der verschiedenen Eingabebestandteile ist dabei grundsätzlich beliebig.

Gemäß einer bevorzugten Verfahrensvariante kann die Trefferwahrscheinlichkeit des erfindungsgemäßen Verfahrens bei der Spracherkennungsanalyse noch weiter erhöht werden. Bei dieser Verfahrensvariante wird jede Kombination aus einem ersten Eingabebestandteil und einem zweiten Eingabebestandteil darauf hin untersucht, ob der zweite Eingabebestandteil als dem ersten Eingabebestandteil zugehörig gekennzeichnet ist, wobei alle Kombinationen, bei denen der zweite Eingabebestandteil dem ersten Eingabebestandteil nicht als zugehörig gekennzeichnet ist, verworfen werden. Diese Verfahrensvariante kann auch so ausgeprägt sein, dass die Treffersuche für den zweiten Eingabebestandteil, beispielsweise den Straßennamen, von vorneherein nur für den dem ersten Eingabebestandteil, beispielsweise einer bestimmten Stadt, zugeordneten zweiten Adressbestandteil durchgeführt wird.

Gemäß einer bevorzugten Variante wird jede Kombination aus einem möglichen Städtenamen und einem möglichen Straßennamen darauf hin untersucht, ob dieser Straßenname in der entsprechenden Stadt überhaupt existiert. Ergibt sich bei dieser Analyse, dass eine solche Straße in der entsprechenden Stadt nicht existiert, wird die Kombination von vorne-herein verworfen, da sie letztendlich irrelevant ist.

Gemäß einer zusätzlichen Erweiterung dieser Verfahrensvariante kann jede Kombination aus einem Straßennamen und einer Hausnummer darauf untersucht werden, ob diese Hausnummer in der entsprechenden Straße überhaupt existiert. Existiert eine solche Hausnummer in der entsprechenden Straße nicht, wird auch diese Kombination verworfen, da das mögliche Ergebnis dieser Kombination offensichtlich irrelevant ist.

Abhängig von den Sprachgewohnheiten in unterschiedlichen Ländern kann die Eingabe der verschiedenen Eingabebestandteile in jeweils verschiedener Reihenfolge sinnvoll sein. Um dies entsprechend berücksichtigen zu können, ist es besonders sinnvoll, wenn die Reihenfolge der verschiedenen Eingabebestandteile der akustischen Adresseingabe durch Benutzereinstellung konfiguriert ist, um so variabel auf die verschiedenen landestypischen Üblichkeiten reagieren zu können.

Alternativ zur Vorkonfiguration der Reihenfolge der verschiedenen Eingabebestandteile ist auch denkbar, dass die verschiedenen Eingabebestandteile der akustischen Adresseingabe darauf hin analysiert werden, welche Kategorien von Eingabebestandteilen, insbesondere im Hinblick auf die Eingabe von Städtenamen, Straßennamen oder Hausnummern, in der Eingabe enthalten sind. Durch diese zusätzliche Sprachanalyse kann also eine Gesamteingabe in die verschiedenen Eingabebestandteile in den entsprechenden Kategorien aufgeteilt werden.

Eine mögliche Ausführungsform zur Anwendung des erfindungsgemäßen Verfahrens soll nachfolgend beispielhaft erläutert werden. Gemäß dieser Verfahrensvariante wird wie folgt vorgegangen:
1. Der Benutzer gibt einen Städtenamen ein.
2. Das Navigationssystem ermittelt durch Sprachanalyse eine Anzahl möglicher Treffer für diese Eingabe eines Städtenamens aus allen Städten einer vorher gewählten Region, beispielsweise einem bestimmten Land, z.B. Deutschland.

Jedem dieser Treffer wird ein akustischer Übereinstimmungswert zugeordnet, der die Trefferwahrscheinlichkeit der Spracherkennungsanalyse charakterisiert.
3. Das System erstellt für alle möglichen Treffer der Stadteingabe eine gemeinsame Straßenliste, in der alle Straßen dieser möglichen Treffer enthalten sind.
4. Das System fordert zur Eingabe eines Straßennamens auf.
5. Der Benutzer spricht einen Straßennamen ein.
6. Das Navigationssystem ermittelt durch Spracherkennungsanalyse eine Anzahl von möglichen Treffern für diese Straßeneingabe, wobei nur Straßen aus der vorher berechneten Stadtliste berücksichtigt werden, um dadurch bereits alle Kombinationen auszuschließen, die von vorneherein irrelevant sind.
7. Das System fordert zur Eingabe der Hausnummer auf.
8. Der Benutzer spricht eine Hausnummer ein.
9. Das Navigationssystem bestimmt durch Spracherkennungsanalyse eine mögliche Hausnummer.
10. Das System vergleicht nun Stadtliste und Straßenliste, wobei jedem Element dieser beiden Listen ein akustischer Übereinstimmungswert zugeordnet ist. Für alle Kombinationen der in den Listen enthaltenen Städtenamen und Straßennamen wird dann durch Kombinationsbewertung aus den jeweiligen akustischen Übereinstimmungswerten eine Kombinationsbewertung ermittelt. Die Kombination aus Städtenamen und Straßennamen mit der höchsten Kombinationsbewertung, d.h. mit dem höchsten Wahrscheinlichkeitsprodukt des akustischen Übereinstimmungswerts des Städtenamens und des akustischen Übereinstimmungswerts des Straßennamens, wird als bester Treffer angeboten.

Für die Funktion des Verfahrens ist die Reihenfolge der verschiedenen Eingabebestandteile grundsätzlich unerheblich, insbesondere kann auch die Hausnummer vor der Straße eingegeben werden. Als Variante der oben dargestellten beispielhaften technischen Umsetzung könnte auch erst die akustische Eingabe insgesamt vorgenommen werden, und danach könnten die jeweiligen Listen unter Einbezug der verschiedenen akustischen Übereinstimmungswerte zusammengestellt werden. Das Verfahren kann dabei frei konfiguriert werden, um auf die Gewohnheiten des Benutzers abgestimmt zu werden. So können beispielsweise amerikanische Adressen wie folgt eingegeben werden: "7, Main Street, Chicago, Illinois".

Anhand eines Beispiels soll das obige Verfahren noch weiter beispielhaft erläutert werden.

In diesem Beispiel spricht der Benutzer den Städtenamen "Würzburg" in das Mikrofon des Navigationssystems.

Durch Spracherkennungsanalyse erkennt das Navigationssystem folgende Städte mit dem jeweils dahinter angegebenen akustischen Übereinstimmungswert, der die Trefferwahrscheinlichkeit charakterisiert:
- Wurzbach 89 % Übereinstimmungswert
- Würzberg 83 % Übereinstimmungswert
- Würzburg 72 % Übereinstimmungswert
- Wurzberg 69 % Übereinstimmungswert

Das Navigationssystem bildet anschließend eine gemeinsame Liste aus allen Straßen dieser Städte.

Anschließend spricht der Benutzer nach Aufforderung den Straßennamen "Berliner Platz" in die Aufnahmeeinrichtung des Navigationssystems.

Das System erkennt durch Spracherkennungsanalyse folgende Straßen innerhalb der berechneten Straßenliste mit den jeweils dahinter angegebenen akustischen Übereinstimmungswerten:
- Berlingplatz 95 % Übereinstimmungswert
- Berliner Platz 87 % Übereinstimmungswert
- Berner Platz 63 % Übereinstimmungswert

Das Navigationssystem vergleicht nun die möglichen Trefferkombinationen:
- "Berlingplatz" existiert nur in "Wurzberg", so dass alle anderen Kombinationen mit Berlingplatz ohne weiteres verworfen werden können. Die Kombination aus "Berlingplatz" und "Wurzberg" ergibt eine Kombinationsbewertung von 69 % x 95 % = 61,75 %
- "Berliner Platz" existiert nur in "Würzburg", so dass auch hier alle anderen Kombinationen von vorneherein verworfen werden können. Die Kombinationsbewertung der Kombination aus "Würzburg" und "Berliner Platz" ergibt einen Wert von 72 % x 87 % = 62,64 %.
- Der "Berner Platz" existiert in zwei Städten, nämlich in "Wurzbach" und in "Würzburg". Für die Kombination aus "Berner Platz" und "Wurzbach" ergibt sich eine Kombinationsbewertung von 89 % x 63 % = 56,07 %. Für die Kombination aus "Berner Platz" und "Würzburg" ergibt sich eine Kombinationsbewertung von 72 % x 63 % = 45,36 %.

Nach Durchführung der Kombinationsbewertung ergibt sich bei den möglichen Adressen folgende Rangfolge:
- Platz 1: Würzburg, Berliner Platz, Kombinationsbewertung 62,64 %
- Platz 2: Wurzberg, Berlingplatz, Kombinationsbewertung 61,75 %
- Platz 3: Wurzbach, Berner Platz, Kombinationsbewertung 56,07 %
- Platz 4: Würzburg, Berner Platz, Kombinationsbewertung 45,36 %

Im Ergebnis wird dem Benutzer dann die Adresse "Würzburg, Berliner Platz" als bester Treffer angeboten, obwohl bei der Spracherkennungsanalyse der Städtenamen "'Würzburg" mit einem Übereinstimmungswert von 72 % lediglich an dritter Stelle gelegen hatte.

## Patentansprüche

1. Verfahren zum Betrieb eines Navigationssystems mit einer Aufnahmeeinrichtung, an der eine akustische Adresseingabe, die aus mehreren Eingabebestandteilen besteht, aufgenommen werden kann, wobei die Eingabebestandteile der Adresse mit einem Spracherkennungsmodul analysiert werden, und wobei abhängig vom Ergebnis der Spracherkennungsanalyse zumindest ein geografischer Ort, der durch eine Adresse mit mehreren Adressbestandteilen definiert ist, aus einer Datenbank zur Weiterverarbeitung ausgewählt wird,
**dadurch gekennzeichnet,**
**dass**
a) für einen ersten Eingabebestandteil eine Spracherkennungsanalyse durchgeführt wird, wobei abhängig vom Ergebnis der Spracherkennungsanalyse zum ersten Eingabebestandteil mehrere mögliche erste Adressbestandteile aus der Datenbank ausgewählt werden, und wobei zu jedem dieser alternativen ersten Adressbestandteile ein Übereinstimmungswert zur Quantifizierung der akustischen Übereinstimmung mit dem ersten Eingabebestandteil ermittelt wird;
b) für zumindest einen zweiten Eingabebestandteil eine Spracherkennungsanalyse durchgeführt wird, wobei abhängig vom Ergebnis der Spracherkennungsanalyse zum zweiten Eingabebestandteil mehrere mögliche zweite Adressbestandteile aus der Datenbank ausgewählt werden, und wobei zu jedem dieser alternativen zweiten Adressbestandteile ein Übereinstimmungswert zur Quantifizierung der akustischen Übereinstimmung mit dem zweiten Eingabebestandteil ermittelt wird;
c) für unterschiedliche Kombinationen aus jeweils verschiedenen ersten Adressbestandteilen und zweiten Adressbestandteilen jeweils eine Kombinationsbewertung ermittelt wird, die auf den Übereinstimmungswerten der miteinander kombinierten Adressbestandteile beruht.

2. Verfahren nach Anspruch 1,
**dadurch gekennzeichnet,**
**dass** die Kombination von Adressbestandteilen mit der besten Kombinationsbewertung zur Weiterverarbeitung ausgewählt wird.

3. Verfahren nach Anspruch 1 oder 2,
**dadurch gekennzeichnet,**
**dass** eine Liste aus mehreren Kombinationen von Adressbestandteilen, die die relativ höchsten Kombinationsbewertungen aufweisen, zur Weiterverarbeitung ausgewählt wird.

4. Verfahren nach Anspruch 1,
**dadurch gekennzeichnet,**
**dass** die Liste aus mehreren Kombinationen von Adressbestandteilen, die die relativ höchsten Kombinationsbewertungen aufweisen, zur Auswahl einer Adresse für den Benutzer ausgegeben, insbesondere angezeigt, wird.

5. Verfahren nach einem der Ansprüche 1 bis 4,
**dadurch gekennzeichnet,**
**dass** der Benutzer zur Eingabe eines Städtenamens aufgefordert und die Antwort des Benutzers als ein Eingabebestandteil aufgenommen und akustisch analysiert wird, und/oder dass der Benutzer zur Eingabe eines Straßennamens aufgefordert und die Antwort des Benutzers als ein Eingabebestandteil aufgenommen und akustisch analysiert wird, und/oder dass der Benutzer zur Eingabe einer Hausnummer aufgefordert und die Antwort des Benutzers als ein Eingabebestandteil aufgenommen und akustisch analysiert wird.

6. Verfahren nach einem der Ansprüche 1 bis 5,
**dadurch gekennzeichnet,**
**dass** jede Kombination aus einem ersten Eingabebestandteil und einem zweiten Eingabebestandteil darauf hin untersucht wird, ob der zweite Eingabebestandteil als dem ersten Eingabebestandteil zugehörig **gekennzeichnet** ist, wobei alle Kombinationen, bei denen der zweite Eingabebestandteil dem ersten Eingabebestandteil nicht als zugehörig **gekennzeichnet** ist, verworfen werden.

7. Verfahren nach Anspruch 6,
**dadurch gekennzeichnet,**
**dass** jede Kombination aus einem Städtenamen und einem Straßenamen darauf hin untersucht wird, ob dieser Straßename in der entsprechenden Stadt existiert, wobei alle Kombinationen, bei denen die Straße in der entsprechenden Stadt nicht existiert, verworfen werden.

8. Verfahren nach Anspruch 6,
**dadurch gekennzeichnet,**
**dass** jede Kombination aus einem Straßennamen und einer Hausnummer darauf hin untersucht wird, ob diese Hausnummer in der entsprechenden Straße existiert, wobei alle Kombinationen, bei denen eine solche Hausnummer in der entsprechenden Straße nicht existiert, verworfen werden.

9. Verfahren nach einem der Ansprüche 1 bis 8,
**dadurch gekennzeichnet,**
**dass** die Reihenfolge der verschiedenen Eingabebestandteile der akustischen Adresseingabe durch eine Benutzereinstellung konfiguriert ist.

10. Verfahren nach einem der Ansprüche 1 bis 9,
**dadurch gekennzeichnet,**
**dass** verschiedene Eingabebestandteile der akustischen Adresseingabe analysiert und abhängig vom Analyseergebnis einzelne Eingabebestandteile unterschiedlichen Kategorien, insbesondere einem Städtenamen und/oder einem Straßennamen und/oder einer Hausnummer, zugeordnet werden.
